# EUROPÄISCHE PATENTSCHRIFT

(11) **EP 1 046 897 B1**
(45) Veröffentlichungstag und Bekanntmachung des Hinweises auf die Patenterteilung: **24.07.2002**
(21) Anmeldenummer: 99107936.9
(22) Anmeldetag: 22.04.1999
(51) Int. Cl.: G01M 13/02

(54) **Meisterrad zum Überprüfen von Zahnrädern auf Oberflächenfehler**
Master wheel for checking gear wheels for surface defects
Roue principale pour contrôler des roues dentées quant aux défauts de surface

(43) Veröffentlichungstag der Anmeldung: 25.10.2000
(73) Patentinhaber: Ford Global Technologies, Inc., A subsidiary of Ford Motor Company, Dearborn, Michigan 48126 (US)
(72) Erfinder: Escher, Christian, 50858 Köln (DE)
(74) Vertreter: Drömer, Hans-Carsten, Dipl.-Ing.

(56) Entgegenhaltungen:
- EP-A- 0 325 688
- EP-A- 0 744 607
- GB-A- 2 121 543
- US-A- 2 780 007
- US-A- 2 815 581
- PATENT ABSTRACTS OF JAPAN vol. 011, no. 035 (P-542), 3. Februar 1987 (1987-02-03) & JP 61 205816 A (OSAKA SEIMITSU KIKAI KK), 12. September 1986 (1986-09-12)

## Beschreibung

Die Erfindung bezieht sich auf ein Meisterrad für ein Verfahren und eine Vorrichtung zum automatischen Überprüfen von Zahnrädern auf Oberflächenfehler, der im Oberbegriff des Patentanspruches erläuterten Art.

Aus der DE 32 18 811 A1 (= GB 2 121 543 A) ist ein Verfahren und eine Vorrichtung zum automatischen Überprüfen von Zahnrädern auf Oberflächenfehler aus einer beliebigen Anzahl von Zahnrädern bekannt, bei dem das zu überprüfende Zahnrad mit einem Meisterrad in Eingriff gebracht wird und während der Drehung die auftretenden radialen Auslenkungen des Meisterrades erfaßt, in Spannungsimpulse umgesetzt und in einer Meßelektronik hinsichtlich Größe, Dauer und Häufigkeit mit extern einstellbaren Grenzwerten verglichen werden und das Zahnrad über eine Sortierweiche oder eine Anzeige dem jeweiligen Prüfergebnis entsprechend klassifiziert wird.

Bei dem bekannten Verfahren und der bekannten Vorrichtung wird ein übliches Meisterrad angewendet, das gegenüber dem zu prüfenden Zahnrad sich nur durch die genauere Herstellungsweise und eine wesentlich größere Zähnezahl unterscheidet.

Durch die größere Zähnezahl sollen Fehlmessungen, die sich unter anderem auch durch Schmutzablagerungen am Meisterrad oder am zu prüfenden Zahnrad ergeben, vermieden werden.

In den Fertigungseinrichtungen der Anmelderin sind derartige Verfahren und Vorrichtungen zum automatischen Überprüfen von Zahnrädern auf Oberflächenfehlern im Einsatz und die Praxis hat gezeigt, daß es bei der bei dieser Vorrichtung zur Anwendung kommenden üblichen Ausführung von Meisterrädern zu einer erheblichen Fehlerquote kommt, die eine Nacharbeit in Form von zusätzlichen Überprüfungen erforderlich macht, was hohe Zusatzkosten verursacht.

Diese hohe Fehlerquote kommt daher, daß durch die ganzflächige Überprüfung der Zahnflanken auch eine große Anzahl von Schmutzpartikeln zu einer Anzeige eines Oberflächenfehlers führen.

Die Aufgabe der Erfindung ist es, das bekannte Verfahren und die Vorrichtung der im Oberbegriff des Patentanspruches 1 erläuterten Art derart zu verbessern, daß Fehlmessungen aufgrund von Schmutzablagerungen an den Zahnrädern weitestgehend vermieden werden und nur tatsächliche Oberflächenfehler in Form von Kantschäden (Nicks), die bei der Handhabung der "grünen" Zahnräder verursacht werden, erfaßt werden.

Die Lösung dieser Aufgabe geschieht durch das im Kennzeichenteil des Patentanspruches 1 aufgezeigte Meisterrad.

Dadurch, daß das Meisterrad an seinem mit dem zu prüfenden Zahnrad abwälzenden Zahnprofil eine größere Breite und einen einen Großteil der Zahnflankenfläche umfassenden Freistich aufweist, wird bei der Drehung vom Meisterrad und dem zu überprüfenden Zahnrad eine abwälzende Berührung nur in einem Randbereich der Zahnflanke bewirkt, in dem normalerweise solche Kantschäden auftreten und die durch eine Verschmutzung der Zahnflanke verursachte Fehlmessung wird vermieden.

Die Erfindung wird anhand der beiliegenden Zeichnung näher erläutert.
- Fig. 1: zeigt eine schematische Darstellung der Anordnung von Meisterrad und zu überprüfendem Zahnrad vor dem abrollen und
- Fig. 2: eine vergrößerte Darstellung des sich in Eingriff mit dem zu prüfenden Zahnrad befindlichen Meisterrad mit Aufzeigen des tatsächlichen Prüfbereiches.

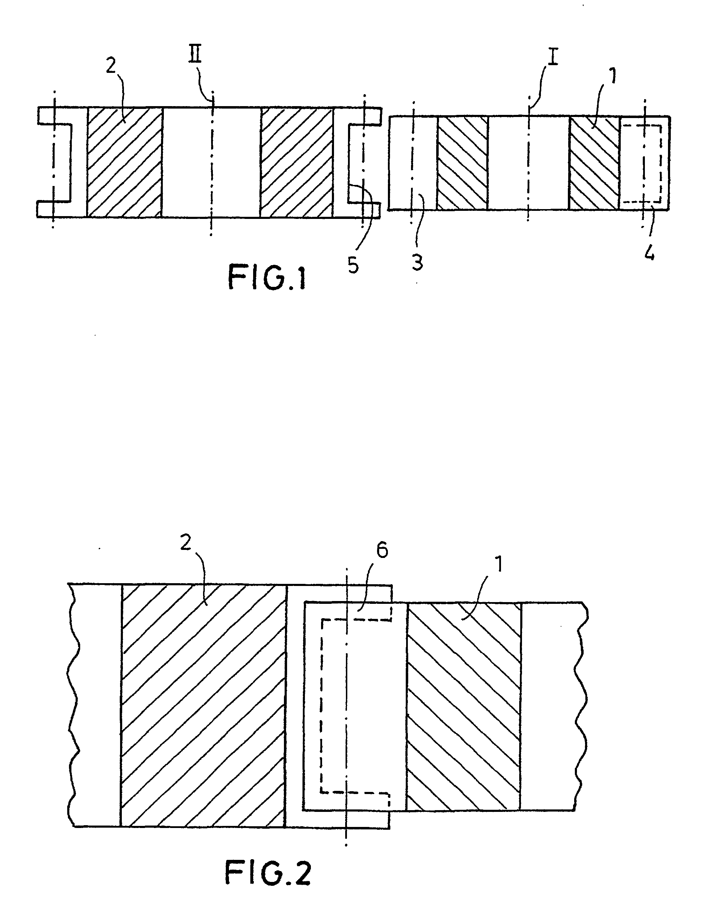

In der Fig. 1 ist das zu prüfende Zahnrad 1 um eine Achse I drehbar gelagert aufgenommen und das normalerweise größere und breitere Meisterrad 2 ist um eine Achse II drehbar gelagert angeordnet.

An dem zu überprüfenden Zahnrad 1 ist die gesamte Zahnflanke 3 an der linken Seite des Zahnrades 1 gezeigt und an der rechten Seite des Zahnrades 1 ist ein Randbereich 4 der Zahnflanke durch eine gestrichelte Linie gekennzeichnet, in dem normalerweise bei der Handhabung der "grünen" Zahnräder solche Kantschäden (Nicks) auftreten.

Gemäß der Erfindung ist das Meisterrad 2 mit einem Freistich 5 versehen, der einen Großteil der Zahnflankenfläche wegnimmt und nur mehr einen Überlappungs- oder Eingriffsbereich 6 (siehe Fig. 2) übrig läßt, der dem Randbereich 4 (siehe Fig. 1) entspricht.

Auf diese Weise wird eine Überprüfung von Zahnrädern auf tatsächliche Oberflächenfehler in Form von Kantschäden (Nicks) derart verbessert, daß die Fehlerquote sehr stark verringert werden kann, was in der Fertigung von Zahnrädern in der Großserie zu einer erheblichen Kosteneinsparung führt, ohne daß hierdurch eine Qualitätsverringerung der Prüfung auf Kantschäden einhergehen würde.

## Patentansprüche

1. Meisterrad für ein Verfahren und eine Vorrichtung zum automatischen Überprüfen von Zahnrädern auf Oberflächenfehler, wobei zu prüfende Zahnräder nacheinander einer Spanneinrichtung zugeführt werden, in der jedes Zahnrad einzeln starr, aber frei drehbar aufgenommen, mit einem radial nachgiebig gelagerten und drehantreibbarem Meisterrad in Eingriff gebracht und von diesem unter radialer Belastung mit zwei Flankenanlage angetrieben wird und die während der Drehung vom Meisterrad (2) durch das zu prüfende Zahnrad (1) auftretende radiale Auslenkungen des Meisterrades (2) erfaßt, in Spannungsimpulse umgesetzt und in einer Meßelektronik hinsichtlich Größe, Dauer und Häufigkeit mit extern einstellbaren Grenzwerten verglichen werden und dem zu prüfenden Zahnrad (1) eine dem jeweiligen Prüfergebnis entsprechende Klassifizierung zugeordnet wird,
**dadurch gekennzeichnet, daß**
- das Meisterrad (2) an seinem mit dem zu prüfenden Zahnrad (1) abwälzenden Zahnprofil einen Freistich (5) aufweist, der einen Großteil der Zahnflankenfläche wegnimmt und nur einen Überlappungs- oder Eingriffsbereich (6) übrig läßt, der dem Randbereich (4) des zu prüfenden Zahnrads entspricht, in dem erfahrungsgemäß Kantschäden auftreten damit bei der Drehung vom Meisterrad und dem zu überprüfenden Zahnrad ein abwälzende Berührung nur in einem Randbereich der Zahnflanke bewirkt wird.

## Claims

1. Master gear for a method and a device for the automatic checking of gears for surface defects, in which gears which are to be tested are successively fed to a clamping means, in which each gear is held so as to be individually rigid but able to rotate freely, is brought into engagement with a master gear, which is mounted in such a way that it can yield in the radial direction and which can be driven in rotation, and is driven by the said master gear under radial load with two-flank contact, and the radial deflections of the master gear (2) which occur during the rotation of the master gear (2) on account of the gear (1) which is to be tested are detected, converted into voltage pulses and compared, in an electronic measuring unit, with externally settable limit values with regard to magnitude, duration and regularity, and the gear (1) which is to be tested is assigned a classification which corresponds to the respective test result, **characterized in that**
- the master gear (2) has, on its tooth profile which rolls with the gear (1) which is to be tested, a cutout (5) which takes away a large part of the tooth-flank surface and only leaves an overlap or engagement region (6), which corresponds to the edge region (4) of the gear which is to be tested, in which experience has shown that edge damage occurs, so that during the rotation of the master gear and the gear which is to be tested, rolling contact is produced only in an edge region of the tooth flank.

## Revendications

1. Roue maîtresse pour un procédé et un dispositif pour vérifier automatiquement la présence de défauts de surface sur des roues dentées, des roues dentées à vérifier étant amenées l'une après l'autre à un dispositif de serrage dans lequel chaque roue dentée est reçue individuellement rigidement mais libre en rotation, est amenée en prise avec une roue maîtresse pouvant être entraînée en rotation, montée de manière radialement élastique, et est entraînée par celle-ci avec sollicitation radiale au niveau des deux flancs et les déviations radiales de la roue maîtresse (2) se produisant pendant la rotation de la roue maîtresse (2) par la roue dentée (1) à vérifier étant détectées, transformées en impulsions de tension et comparées dans une électronique de mesure en ce qui concerne l'amplitude, la durée et la fréquence, à des valeurs limites réglables de l'extérieur, et une classification correspondant à chaque résultat d'essai étant associée à la roue dentée (1) à vérifier, **caractérisée en ce que**
- la roue maîtresse (2) présente, sur son profilé denté roulant avec la roue dentée (1) à vérifier, un dégagement par rainure (5) qui reçoit une majeure partie de la surface des flancs des dents et ne laisse qu'une zone de recouvrement ou d'engagement (6) qui correspond à la zone de bord (4) de la roue dentée à vérifier, dans laquelle se produisent, par expérience des endommagements des arêtes, afin que lors de la rotation de la roue maîtresse et de la roue dentée à vérifier un contact de roulement s'établisse uniquement dans une zone de bord des flancs des dents.
